# EUROPEAN PATENT APPLICATION

(11) **EP 2 752 975 A1**
(43) Date of publication of application: **09.07.2014**
(21) Application number: 12838415.3
(22) Date of filing: 01.08.2012
(51) Int. Cl.: H02K 7/18

(54) **MANUAL POWER GENERATION DEVICE FOR DRIVING ACTUATOR, AND ACTUATOR DRIVE DEVICE**

(30) Priority: 03.10.2011 JP 2011219645
(71) Applicant: Paramount Bed Co., Ltd., Tokyo 136-8670 (JP)
(72) Inventor: NAGAOKA, hiroshi, Tokyo 136-8670 (JP); ISHIBASHI, yoshinori, Tokyo 136-8670 (JP); NAGASE, kazuyuki, Tokyo 136-8670 (JP); AOKI, tetsurou, Tokyo 136-8670 (JP)
(74) Representative: Garkisch, Marcus
(86) International application number: PCT/JP2012/069594
(87) International publication number: WO 2013/051331

(57) **Abstract**

[Problem to be solved] To expand the application of the manual power generator hitherto limited in application and to reduce the size and weight of the manual power generator.

[Solution] The manual power generator of this invention is characterized in that a DC motor (2) capable of acting reversely and a speed increasing mechanism (4) connected with the rotating shaft (3) of the DC motor are respectively housed in a device body (5), that a crank handle connected with the input shaft (6) of the speed increasing mechanism (4) and a power supply cable (8) connected with the power supply side of the DC motor (2) are provided outside the device body (5), and that a connector connectable with the power supply side connector of the DC motor constituting an actuator is provided on the tip side of the power supply cable (8). The speed increasing mechanism (4) is configured as a worm gear mechanism provided with a worm wheel (15) on the crank handle (7) side and a worm (16) as a multiple-threaded screw on the DC motor (2) side, to greatly reduce the size and weight.

## Description

### [Technical field]

The present invention relates to a manual power generator for driving an actuator, and an actuator drive device.

### [Background art]

Numerous manual power generators have been proposed hitherto. Some examples are explained below. At first, patent document 1 describes a manual power generator in which a power generator, a speed increasing gear train comprising spur gears, and a reciprocating rack gear engaged with a clutch gear constituting the speed increasing gear train are accommodated in a portable case, wherein the power generated by manual reciprocation is taken out via an output cord. This manual power generator can be used as a flashlight without a storage battery or the like and can also be used to charge the power storage battery of a portable electric product, etc.

Patent document 2 describes a manual power generator in which a power generator and a speed increasing gear train comprising spur gears are accommodated in a portable case, wherein a section for storing chargeable secondary batteries and a supply terminal section are provided; a crank handle is provided on the input side of the speed increasing gear train; and a power supply cable connector is connected with the supply terminal section, for power supply. This manual power generator is used to supply power to a portable device on an emergency, etc.

Patent document 3 describes a manual power generator in which as in the abovementioned patent documents 1 and 2, a power generator, a speed increasing gear train comprising spur gears and an electric double layer capacitor are accommodated in a portable case, wherein a crank handle is provided on the input side of the speed increasing gear train. In the manual power generator, the power generated manually by the crank handle is stored in the capacitor and can be used via the output terminals provided at the ends of lead wires as the power supply of an electric device such as a radio, flashlight, wireless machine or cell phone, etc.

As described above, in the conventional manual power generators, the speed increasing mechanism as an essential component is mostly constituted by a gear train of spur gears, and consequently the size and weight are large. In another manual power generator in which a belt drive mechanism is used for the speed increasing mechanism, the size and weight are further larger.

In particular, a manual power generator in which a power storage device such as secondary batteries or capacitor is accommodated becomes further larger in size and weight.

On the other hand, a motor-driven actuator used in a motor-driven bed or any of other various apparatuses constitutes a rotation-linear motion converting mechanism comprising male/female threads or the like operated from a motor via a speed reducing mechanism. As the speed reducing mechanism, a worm gear mechanism is used in some actuators, and in such an actuator, the necessary speed reducing ratio can be achieved in one step, to significantly contribute to the decrease of size and weight.

However, though it is known that a worm gear mechanism allows reverse drive by making the helix angle of the worm larger than the friction angle, a worm gear mechanism is generally used hitherto as a speed reducing mechanism only, and the reverse drive is restrictively applied, for example, to the governing mechanism of a musical box, etc.

### [Prior art documents]

### [Patent documents]

[Patent document 1] JP 3053139 U
[Patent document 2] JP 11-288742 A
[Patent document 3] JP 3103789 U

### [Summary of the invention]

### [Problem to be solved by the invention]

The application of the conventional manual power generators is limited to the power supply to portable electric products, etc. A problem to be solved by this invention, hence an object of this invention is to widen the application.

Another problem to be solved by the invention is that the conventional manual power generators are large in the size and weight of the speed increasing mechanism, and therefore, another object of this invention is to reduce the size and weight of the speed increasing mechanism.

This invention for solving the abovementioned problems proposes a manual power generator for driving an actuator, characterized in that a DC motor capable of acting reversely and a speed increasing mechanism connected with the rotating shaft of the DC motor are housed in a device body, that a crank handle connected with the input shaft of the speed increasing mechanism and a power supply cable connected with the power supply side of the DC motor are provided outside the device body, and that a connector connectable with the power supply side connector of the DC motor constituting an actuator is provided on the tip side of the power supply cable.

Further, this invention proposes a manual power generator for driving an actuator with the abovementioned constitution, wherein the speed increasing mechanism is configured as a worm wheel on the crank handle side and as a worm on the DC motor side. Furthermore, this invention proposes a manual power generator for driving an actuator wherein the worm is configured as a multiple-threaded screw.

Moreover, this invention proposes an actuator drive device comprising an actuator provided with a rotation-linear motion converting mechanism operated from a DC motor via a speed reducing mechanism, and the abovementioned manual power generator for driving the actuator.

Further, this invention proposes an actuator drive device with the abovementioned constitution, wherein the DC motor and the speed reducing mechanism of the actuator have the same configuration as that of the DC motor and the speed increasing mechanism of the manual power generator.

### [Effects of the invention]

In the manual power generator of this invention, the connector of the power supply cable is connected with the power supply side connector of the DC generator constituting the actuator, and subsequently the device body is held by hand. The crank handle is then rotated for driving.

The rotation of the crank handle is increased in speed by the speed increasing mechanism, to rotate the rotor of the DC generator, for generating electromotive force, and the DC power thus generated is supplied to the DC motor constituting the actuator via the power supply cable, for operating the actuator.

For example, in the case where an actuator is used as a mechanism for displacement such as a pivotally moving mechanism for a bed bottom part, the action is only required to obtain predetermined displacement, and it is not necessarily required to obtain a controlled certain action such as a constant speed action, etc. Consequently, the manual power generator of this invention can be used to operate the actuator well.

In this invention, if the speed increasing mechanism constituting the manual power generator is configured as a worm gear mechanism having a worm wheel on the crank handle side and a worm on the DC motor side, the size and weight can be greatly decreased.

In this case, the worm can be a two- or more-threaded screw, i.e., a multiple-threaded screw, to enlarge the helix angle for reducing the influence of friction. In general, the rotational speed necessary as a power generator is, for example, 1500 rpm (24 Hz) or higher at the minimum. Further, as for the rotational speed that can be inputted by a manual device, 120 rpm (2 Hz) is considered to be close to a limit value, and in this case, a speed increasing ratio of 12.5 or higher is necessary. In this invention, if the worm is a two- or more-threaded screw, a high speed increasing ratio and a higher transmission efficiency can be achieved. In the size and structure that can be easily operated, a manual power generator complying with the aforementioned requirements can be realized.

In this invention, the DC motor and the speed reducing mechanism of the actuator can have the same configuration as that of the DC motor and the speed increasing mechanism of the manual power generator. In this constitution, the cost can be greatly reduced.

### [Brief description of the drawings]

[Fig. 1] Fig. 1 is an illustration for conceptually showing the constitution and action of the manual power generator of this invention.
[Fig. 2] Fig. 2 is an illustration showing the appearance of the main body of the manual power generator of this invention.
[Fig. 3] Fig. 3 is a longitudinal sectional illustration showing the manual power generator of this invention.
[Fig. 4] Fig. 4 is a front view showing the constitution of a DC motor and a speed increasing mechanism as components of the manual power generator of this invention.
[Fig. 5] Fig. 5 is a plan view showing the constitution of a DC motor and a speed increasing mechanism as components of the manual power generator of this invention.
[Fig. 6] Fig. 6 is a left side view showing the constitution of a DC motor and a speed increasing mechanism as components of the manual power generator of this invention.
[Fig. 7] Fig. 7 is an illustration showing an example of using this invention.

### [Modes for carrying out the invention]

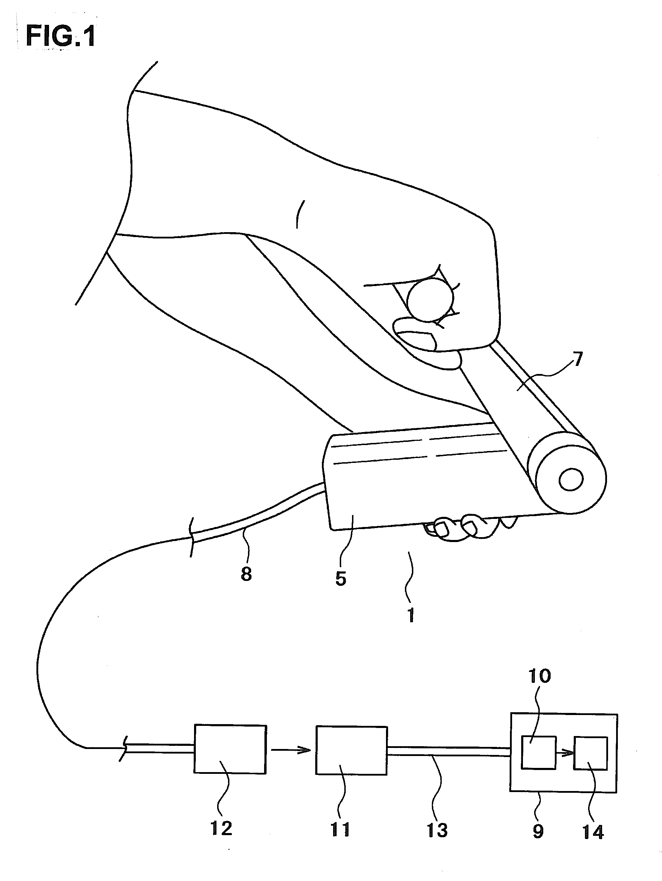

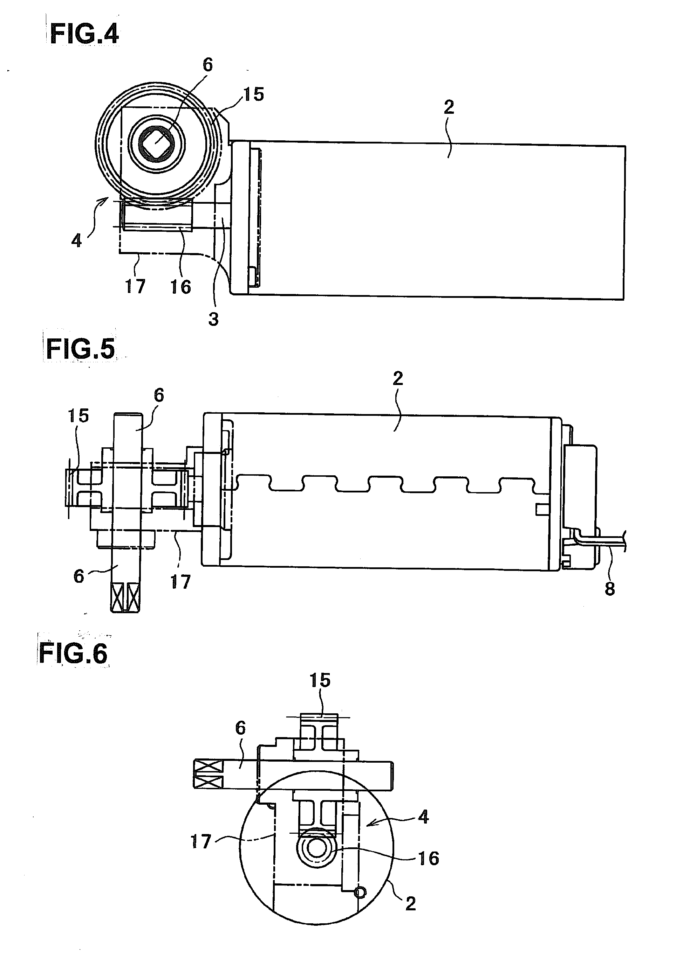

The modes for carrying out the manual power generator of this invention will be explained in reference to the attached Figs. 1 through 7.

In these drawings, symbol (1) generally denotes the manual power generator of this invention. In the manual power generator (1), a DC motor (2) capable of acting reversely and a speed increasing mechanism (4) connected with the rotating shaft (3) of the DC motor (2) are accommodated in a device body (5). Further, a crank handle (7) connected with the input shaft (6) of the speed increasing mechanism (4) and a power supply cable (8) connected with the power supply side of the DC motor (2) are provided outside the device body (5), and a power supply connector (12) connectable with the power supply side connector (11) of the DC motor (10) constituting the actuator (9) is provided on the tip side of the power supply cable (8). Symbol (13) denotes a power receiving cable, and symbol (14) denotes the speed reducing mechanism as a component of the actuator (9). Meanwhile, in this embodiment, the device body (5) is a pair of shells divided in the longitudinal direction and combined by screws (not shown in the drawing), to house and support the components.

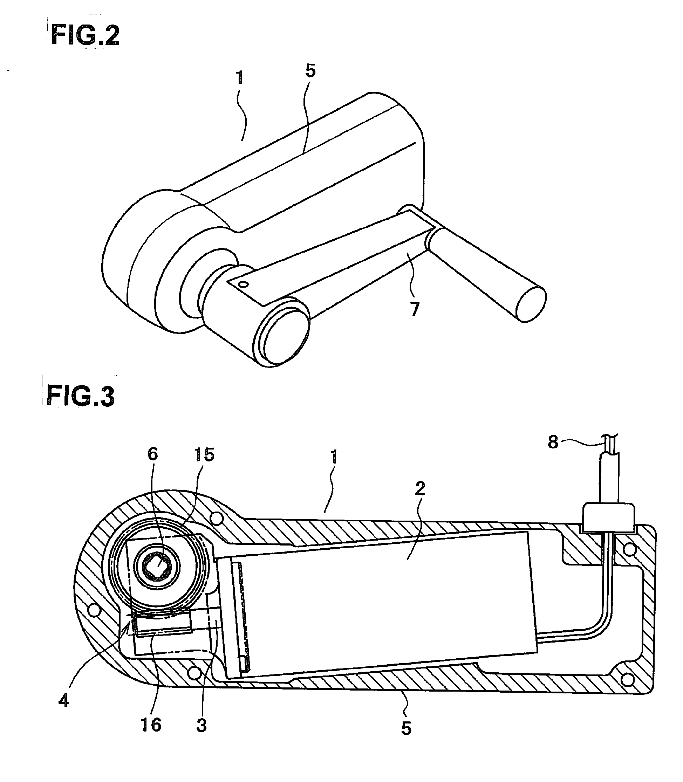

The speed increasing mechanism (4) will be explained in detail. As shown in Figs. 3 through 6, the speed increasing mechanism (4) has a worm wheel (15) on the crank handle (7) side, and the input shaft (6) is projected from the worm wheel (15). The speed increasing mechanism (4) also has a worm (16) engaged with the worm wheel (15) on the DC motor (2) side. Further, the worm (16) is configured as a two-threaded screw, and the helix angle thereof is larger than the friction angle. Consequently the worm gear mechanism can act reversely. Furthermore, the worm gear mechanism can easily obtain a large speed increasing ratio (speed reducing ratio), for example, of 1/32. Meanwhile, the member of symbol (17) indicated by a two-dot-dash line in the drawings is a support member for the input shaft (6), the worm wheel (15) and the worm (16).

In the above constitution, in the manual power generator (1) of this invention, as shown in Fig. 1, the power supply connector (12) of the power supply cable (8) is connected with the power supply side connector (11) of the DC motor (10) constituting the actuator (9), and subsequently the device body (5) is held by hand, to rotate the crank handle (7) for driving.

The rotation of the crank handle (7) is increased in speed by the speed increasing mechanism (4), to rotate the rotor of the DC generator (2), for generating electromotive force, and the DC power generated as described above is supplied to the DC motor (10) constituting the actuator (9) via the power supply cable (8), for operating the actuator (9).

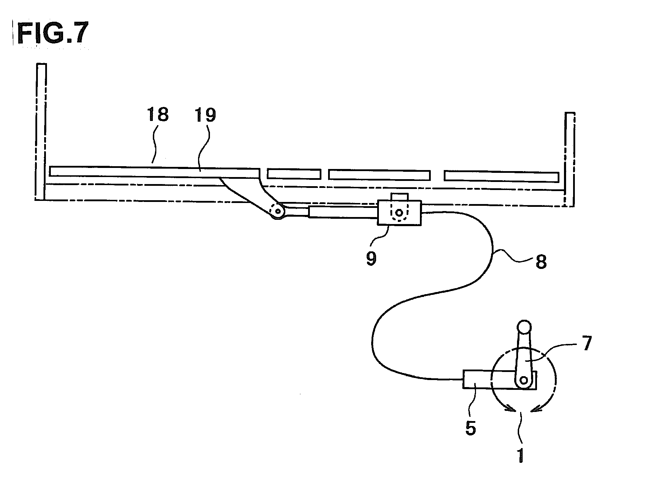

For example, Fig. 7 shows a case where the actuator (9) is used as a pivotal moving mechanism for a bed bottom part (19) of a bed (18), and the action in this case is only required to obtain suitable displacement, and it is not necessarily required to obtain a controlled certain action such as a constant speed action, etc. Consequently, the manual power generator (1) of this invention can be used to operate the actuator (9) satisfactorily for pivotally moving a bed bottom part in suitable position.

### [Example 1]

Specifications in one example of the manual power generator (1) of this invention are explained below.
Manual input: 10 to 50 [N]
Manual rotational speed of input shaft: 30 to 120 [rpm]
Speed reducing ratio (speed increasing ratio): 1/15.5
Rotational speed of rotating shaft: 456 to 1860 [rpm]
Generated power: 10 to 30 [VA]

In this embodiment, the speed increasing mechanism (4) constituting the manual power generator (1) is configured as a worm gear mechanism provided the worm wheel (15) on the crank handle (7) side and the worm (16) as a two-threaded screw on the DC motor (2) side, and consequently the size and weight can be greatly decreased. Therefore, components can be housed in the device body (5) that can be held by hand, and the manual power generator (1) complying with the abovementioned specifications can be realized.

In the manual power generator (1) of this invention, the DC motor (2) and the speed increasing mechanism (4) constituting the manual power generator (1) can have the same configuration as that of the DC motor (10) and the speed reducing mechanism (14) of the actuator (9) driven by the manual power generator (1) of this invention, in order to greatly reduce the cost.

### [Industrial applicability]

This invention as described above has a special feature that the DC motor of an actuator that can be used for various applications can be operated by a small-sized light-weight manual power generator.

Therefore, the manual power generator of this invention is very highly usable as a device for driving an actuator in an ordinary state or when an actuator cannot be operated due to lack of power at the time of power failure, etc. Thus, the manual power generator is very highly applicable.

### [Meanings of the symbols]

- 1: Manual power generator
- 2: DC motor
- 3: Rotating shaft
- 4: Speed increasing mechanism
- 5: Device body
- 6: Input shaft
- 7: Crank handle
- 8: Power supply cable
- 9: Actuator
- 10: DC motor
- 11: Power supply side connector
- 12: Power supply connector
- 13: Power receiving cable
- 14: Speed reducing mechanism
- 15: Worm wheel
- 16: Worm
- 17: Support member
- 18: Bed
- 19: Bed bottom part

## Claims

1. A manual power generator for driving an actuator, **characterized in that** a DC motor capable of acting reversely and a speed increasing mechanism connected with the rotating shaft of the DC motor are housed in a device body, that a crank handle connected with the input shaft of the speed increasing mechanism and a power supply cable connected with the power supply side of the DC motor are provided outside the device body, and that a connector connectable with the power supply side connector of the DC motor constituting an actuator is provided on the tip side of the power supply cable.

2. A manual power generator for driving an actuator, according to claim 1, wherein the speed increasing mechanism is provided with a worm wheel on the crank handle side and a worm on the DC motor side.

3. A manual power generator for driving an actuator, according to claim 2, wherein the worm is configured as a multiple-threaded screw.

4. An actuator drive device comprising an actuator provided with a rotation-linear motion converting mechanism operated from a DC motor via a speed reducing mechanism, and the manual power generator set forth in any one of claims 1 through 3.

5. An actuator drive device, according to claim 4, wherein the DC motor and the speed reducing mechanism of the actuator have the same configuration as that of the DC motor and the speed increasing mechanism of the manual power generator.
